# EUROPÄISCHE PATENTSCHRIFT

(11) **EP 4 145 003 B1**
(45) Veröffentlichungstag und Bekanntmachung des Hinweises auf die Patenterteilung: **17.04.2024**
(21) Anmeldenummer: 22203707.9
(22) Anmeldetag: 01.09.2020
(51) Int. Cl.: F16B 12/22, F16B 12/26, F16B 12/60, A47C 7/54, A47C 13/00

(54) **VORRICHTUNG ZUR VERBINDUNG VON MÖBELTEILEN UND VERFAHREN ZUR MONTAGE EINES MÖBELS**
DEVICE FOR CONNECTING FURNITURE PARTS AND METHOD FOR ASSEMBLING A FURNITURE
DISPOSITIF DE LIAISON D'ÉLÉMENTS DE MEUBLE ET PROCÉDÉ DE MONTAGE D'UN MEUBLE

(30) Priorität: 10.09.2019 DE 102019124306; 02.06.2020 DE 102020114675
(43) Veröffentlichungstag der Anmeldung: 08.03.2023
(62) Teilanmeldung aus: 20764995.5
(73) Patentinhaber: Hettich Franke GmbH & Co. KG, 72336 Balingen-Weilstetten (DE)
(72) Erfinder: GRATHWOL, Steffen, 72336 Balingen (DE); SAUTER, Benjamin, 72461 Albstadt (DE); SCHLAICH, Marcel, 72351 Geislingen (DE); STEEB, Philipp, 72411 Bodelshausen (DE)
(74) Vertreter: Dantz, Jan Henning

(56) Entgegenhaltungen:
- DE-C- 805 178
- US-A- 2 114 397

## Beschreibung

Die vorliegende Erfindung betrifft eine Vorrichtung zur Verbindung von Möbelteilen nach dem Oberbegriff des Anspruches 1 sowie ein Verfahren zur Montage eines Möbels nach dem Oberbegriff des Anspruches 2.

Die DE 20 2017 107 179 U1 offenbart ein Möbel, bei dem zwei Möbelteile über zwei unterschiedliche Verbindungen aneinander fixiert sind. An einer ersten Verbindung können die beiden Möbelteile relativ zueinander verschwenkbar gelagert werden, und an einer zweiten Verbindung erfolgt eine Verrastung. Zur Fixierung der beiden Möbelteile sind zahlreiche Bauteile erforderlich, die positionsgenau montiert werden müssen, um eine sichere Verbindung der beiden Möbelteile zu gewährleisten. Eine Montage kann nur über einen Fachmann erfolgen.

Die DE 10 2016 100 753 A1 offenbart einen Möbelbeschlag zur Verbindung von Möbelteilen, bei dem zwei relativ zueinander verschiebbare Achsen vorgesehen sind. Die Achsen sind über eine Feder relativ zueinander vorgespannt, so dass die beiden Beschlagsteile aneinander verrastet werden können. Dies vereinfacht die Montage, allerdings sind zahlreiche Bauteile zur Herstellung der beiden Beschlagsteile erforderlich.

DE 805 178 offenbart einen Seitenteilbeschlag für Polstermöbel, beim dem ein verschwenkbares Gelenkteil über einen Längsschlitz an einem Gelenkbolzen gehalten ist und über einen Haken verriegelbar ist.

US 2,114,397 offenbart einen mehrteiligen Beschlag zur Fixierung einer Strebe eines Bettes.

Es ist daher Aufgabe der vorliegenden Erfindung eine einfach zu montierende Vorrichtung zur Verbindung von Möbelteilen und ein Verfahren zur Montage eines Möbelsbereit zu stellen, das auch von wenig geübten Personen durchführbar ist.

Diese Aufgabe wird mit einer Vorrichtung mit den Merkmalen des Anspruches 1 sowie einem Verfahren zur Montage eines Möbels mit den Merkmalen des Anspruches 2 gelöst.

Ein Verbindungsbeschlag weist zwei Teile auf, die durch eine einfache Bewegung aneinander verriegelbar sind, um zwei Möbelteile aneinander festzulegen. An dem ersten Teil ist dabei eine Aufnahme für eine Anlagekante des zweiten Teils vorgesehen, so dass das zweite Teil relativ zu dem ersten Teil um die Anlagekante in einem ersten Winkelbereich verschwenkbar ist. In diesem ersten Winkelbereich berühren sich das erste Teil und das zweite Teil nur über die Anlagekante und die Aufnahme. Das erste Teil weist zudem eine Führungsfläche auf, die durch eine Gleitfläche an dem zweiten Teil kontaktiert werden kann. Sobald die Gleitfläche an dem zweiten Teil die Führungsfläche berührt, kann das erste Teil relativ zu dem zweiten Teil über einen zweiten Winkelbereich verschwenkt werden, der sich an den ersten Winkelbereich anschließt. Bei diesem Verschwenken entlang des zweiten Winkelbereiches bewegt sich die Gleitfläche an dem zweiten Teil entlang der Führungsfläche, so dass zusätzlich zu der reinen Drehbewegung eine translatorische Bewegung durch die Führung bewirkt wird. Am Ende der Führungsfläche weist das erste Teil ein Verriegelungselement auf, an dem das zweite Teil gegen ein Verschwenken verriegelbar ist. Dadurch kann das zweite Teil durch eine einfache Schwenkbewegung relativ zu dem ersten Teil verriegelt werden, wobei die beiden Teile in der verriegelten Position gegen eine Schwenkbewegung gesichert sind.

Das Verriegelungselement kann als Aussparung ausgebildet sein, in die ein Vorsprung des zweiten Teils einfügbar ist. Dadurch lässt sich auf einfache Weise eine Verriegelung bewirken, wobei das zweite Teil bei einem Verschwenken über die Führungsfläche vorzugsweise in eine erste Richtung translatorisch verschoben wird und zum Verriegeln in die zur ersten Richtung gegenüberliegende zweite Richtung bewegt wird, um an dem ersten Teil verriegelt zu werden. Dadurch kann ein Lösen der Verbindung zwischen dem ersten und dem zweiten Teil nur durch ein Verschieben des zweiten Teils relativ zu dem ersten Teil und ein nachfolgendes Verschwenken erfolgen. Ohne eine solche Schiebebewegung sind die beiden Teile sicher gegen ein Verschwenken verriegelt.

An dem ersten Teil ist vorzugsweise ein abgebogener Steg vorgesehen, an dem die Führungsfläche ausgebildet ist. Die Führungsfläche erstreckt sich vorzugsweise geneigt zu einer Umfangsrichtung, entlang der die Gleitfläche beim Verschwenken bewegt wird, um das zweite Teil relativ zu dem ersten Teil zu verschieben.

Für eine sichere Lagerung des zweiten Teils an dem ersten Teil kann an dem ersten Teil eine U-förmig oder L-förmig gebogene Aufnahme ausgebildet sein. Bei der Montage kann dann die Anlagekante in diese gewinkelte oder umgebogene Aufnahme eingesetzt werden, um dann über einen gewissen Winkelbereich verschwenkt zu werden.

In einer weiteren Ausgestaltung weist das zweite Teil eine Öffnung auf, in die ein abgebogener Steg mit der Führungsfläche des ersten Teils einfügbar ist. Dadurch kann das zweite Teil gegen ein Verschieben parallel zur Längsrichtung einer Drehachse der Schwenkbewegung gesichert werden. Vorzugsweise ist an einer Öffnung ein Vorsprung ausgebildet, der in die Aussparung an dem ersten Teil einfügbar ist. Dadurch kann durch Eingreifen des Vorsprunges eine Verriegelung des ersten Teils an dem zweiten Teil gegen eine Schwenkbewegung erfolgen.

Für eine verbesserte Führung der Schwenkbewegung kann die Anlagekante an dem zweiten Teil zwischen zwei Zentriervorsprüngen angeordnet sein, wobei die Zentriervorsprünge die Aufnahme an dem ersten Teil beim Verschwenken umgreifen. Dadurch wird ein Verschieben des zweiten Teils in Richtung der Drehachse über die Zentriervorsprünge verhindert.

Für eine einfache Fixierung an einem Möbelteil kann das erste Teil eine ebene Basisfläche aufweisen, an der eine Fixierung des ersten Möbelteils über Befestigungsmittel, insbesondere eine oder mehrere Schrauben, erfolgt. Auch das zweite Teil kann eine ebene Basisfläche aufweisen, an der das zweite Möbelteil über Befestigungsmittel, wie Schrauben, fixiert wird.

Vorzugsweise sind das erste Teil und/oder das zweite Teil aus einem gebogenen Metallblech herstellt, so dass der Verbindungsbeschlag einfach herstellbar ist. Der Verbindungsbeschlag besteht vorzugsweise nur aus den zwei Teilen aus einem gebogenen Metallblech, die dann über Befestigungsmittel jeweils an einem Möbelteil fixiert werden.

Die Vorrichtung wird bei Möbeln eingesetzt, beispielsweise bei Sitzmöbeln, wie Sofas oder Sesseln, um Armlehnen, Kopfteile oder andere Möbelteile an einem Basisteil zu fixieren, oder auch um zwei oder mehrere Möbel-Basisteile zu verbinden, wobei jedes Basisteil selbst auf dem Fußboden steht. Die Möbelteile können bevorzugt über zwei getrennte Verbindungsbeschläge und eine einzige Schwenkbewegung miteinander verbunden werden.

Eine erfindungsgemäße Vorrichtung zur Verbindung von Möbelteilen, insbesondere Möbelteilen eines Polstermöbels, umfasst einen ersten Verbindungsbeschlag mit einem ersten an einem ersten Möbelteil festlegbaren Teil und einem zweiten an einem zweiten Möbelteil festlegbaren Teil, sowie einen zweiten Verbindungsbeschlag mit einem ersten an dem ersten Möbelteil festlegbaren Teil und einem zweiten an dem zweiten Möbelteil festlegbaren Teil, wobei das erste Teil des zweiten Verbindungsbeschlages eine Aufnahme für eine Anlagekante des zweiten Teils des zweiten Verbindungsbeschlages aufweist und das zweite Teil relativ zu dem ersten Teil um die Anlagekante in einem Winkelbereich verschwenkbar ist. Dabei ist an dem ersten Teil des ersten Verbindungsbeschlages eine Führungsfläche vorgesehen, die das zweite Teil des ersten Verbindungsbeschlages mit einer Gleitfläche beim Verschwenken kontaktiert und das zweite Teil relativ zu dem ersten Teil zusätzlich translatorisch verschiebt, und das erste Teil am Ende der Führungsfläche ein Verriegelungselement aufweist, an dem das zweite Teil gegen ein Verschwenken verriegelbar ist. Erfindungsgemäß erfolgt das translatorische Verschieben bezogen auf eine durch die Anlagekante gebildete Schwenkachse zumindest teilweise senkrecht zur radialen Richtung. Das Verriegeln kann beispielsweise durch einen Vorsprung an dem zweiten Teil erfolgen, der am Ende der Gleitfläche in einer Aussparung an dem ersten Teil eingreift. Bei dem erfindungsgemäßen Verfahren zur Montage eines Möbels mit einem ersten Möbelteil an dem ein erstes Teil und einem zweiten Möbelteil, an dem ein zweites Teil eines Verbindungsbeschlages fixiert ist, sowie aus einem zweiten Verbindungsbeschlag mit einem ersten an dem ersten Möbelteil festlegbaren Teil und einem zweiten an dem zweiten Möbelteil festlegbaren Teil, wird zunächst eine Anlagekante des zweiten Teils des zweiten Verbindungsbeschlages an einer Aufnahme des ersten Teils des zweiten Verbindungsbeschlages angesetzt, um dann das zweite Teil relativ zu dem ersten Teil zu verschwenken. Dann wird eine Gleitfläche an dem zweiten Teil des ersten Verbindungsbeschlages entlang einer Führungsfläche an dem ersten Teil des ersten Verbindungsbeschlages bei dem Verschwenken bewegt, wobei das zweite Teil relativ zu dem ersten Teil zusätzlich translatorisch verschoben wird, um dann das zweite Teil an dem ersten Teil am Ende der Führungsfläche gegen eine Schwenkbewegung zu verriegeln. Dabei erfolgt die translatorische Bewegung des zweiten Teils bei der Schwenkbewegung um die Anlagekante, die eine Schwenkachse ausbildet, zumindest teilweise senkrecht zur radialen Richtung.

Die Erfindung wird nachfolgend anhand mehrerer Ausführungsbeispiele mit Bezug auf die beigefügten Zeichnungen näher erläutert. Es zeigen:
- Figur 1: eine perspektivische Explosionsdarstellung eines Ausführungsbeispiels eines nicht erfindungsgemäßen Verbindungsbeschlages;
- Figuren 2A bis 2C: mehrere Ansichten der beiden Teile des Verbindungsbeschlages bei der Montage;
- Figuren 3A bis 3D: vier Ansichten des Verbindungsbeschlages der Figur 1 mit einer optionalen Versteifungs-Biegung bei der Montage mit schematisch dargestellten Möbelteilen;
- Figuren 4A und 4B: zwei Ansichten eines Möbels bei der Montage über einen Verbindungsbeschlag;
- Figuren 5A bis 5C: mehrere Ansichten des Möbels der Figur 4 in der montierten Position;
- Figuren 6A bis 6C: mehrere Ansichten eines modifizierten Möbels bei der Montage eines erfindungsgemäßen Verbindungsbeschlages;
- Figuren 7A und 7B: zwei Ansichten des Verbindungsbeschlages der Figur 6 mit schematisch dargestellten Möbelteilen;
- Figuren 8A bis 8C: drei Ansichten eines ersten Teils des Verbindungsbeschlages der Figuren 6 bis 7;
- Figuren 9A bis 9C: drei Ansichten eines zweiten Teils des Verbindungsbeschlages der Figuren 6 bis 7;
- Figur 10: eine perspektivische Ansicht einer Vorrichtung zur Verbindung von Möbelteilen in einer montierten Position;
- Figuren 11A und 11B: zwei Ansichten der Vorrichtung der Figur 10 ohne Möbelteile;
- Figur12: eine perspektivische Ansicht des ersten Verbindungsbeschlages der Vorrichtung der Figur 10 vor der Montage, und
- Figur 13: eine perspektivische Ansicht des zweiten Verbindungsbeschlages der Vorrichtung der Figur 10 vor der Montage.

Ein Verbindungsbeschlag 3 umfasst ein erstes Teil 10 und ein zweites Teil 20. Die beiden Teile 10 und 20 sind aus einem gebogenen Metallblech hergestellt und durch Stanzen und Biegen geformt. Alternativ können die Teile 10 und 20 auch aus Kunststoff oder einem anderen Material hergestellt werden, beispielsweise im Spritzgießverfahren oder im 3D-Druckverfahren.

Das erste Teil 10 ist im Wesentlichen rechteckförmig ausgebildet und umfasst an einer ersten Stirnseite eine Aufnahme 11, die durch Biegen eines endseitigen Steges 12 hergestellt ist. Dadurch ergibt sich eine rinnenförmige Aufnahme 11, in die eine Anlagekante 21 des zweiten Teils 20 einfügbar ist.

Das erste Teil 10 umfasst eine ebene Basisfläche 13, an der Öffnungen 14 für Befestigungsmittel ausgespart sind, insbesondere für Schrauben, um das erste Teil 10 an einem ersten Möbelteil fixieren zu können. Der Steg 12 kann in einem Winkel zu der ebenen Basisfläche 13 von beispielsweise 90° bis 20° ausgerichtet sein, um eine rinnenförmige Aufnahme 11 zu bilden.

Auf der zu der Aufnahme 11 gegenüberliegenden Seite an dem ersten Teil 10 ist eine Biegung 16 vorgesehen, an der ein abgewinkelter Steg mit einer Führungsfläche 15 ausgebildet ist. Im Bereich der Biegung 16 ist eine Aussparung 17 ausgebildet. Die Stege 12 und der Steg mit der Führungsfläche 15 sind einander zugewandt.

Das zweite Teil 20 umfasst ebenfalls eine ebene Basisfläche 23, an der Öffnungen 24 für Befestigungsmittel ausgespart sind, um das zweite Teil 20 an einem zweiten Möbelteil zu fixieren. Von dieser Basisfläche erstrecken sich an gegenüberliegenden Seiten Stufen 28, so dass die zwei gegenüberliegenden Endabschnitte des zweiten Teils 20 in einer Ebene versetzt zu der Basisfläche 23 angeordnet sind, aber im Wesentlichen parallel dazu. An einem ersten Endabschnitt ist eine Anlagekante 21 ausgebildet, die zwischen zwei hervorstehenden Zentriervorsprüngen 22 angeordnet ist. Die Anlagekante 21 bildet bei der Montage eine Drehachse für das zweite Teil 20 aus.

An dem gegenüberliegenden Endabschnitt des zweiten Teils 20 ist eine Öffnung 25 ausgespart, in die ein Vorsprung 27 hervorsteht, der zu der Anlagekante 21 gerichtet ist. An dem Vorsprung 27 ist eine Gleitfläche 26 ausgebildet, die beim Montagevorgang die Führungsfläche 15 an dem ersten Teil 10 kontaktieren kann. Die Öffnung 25 ist rahmenförmig von dem Material des zweiten Teils 20 umgeben.

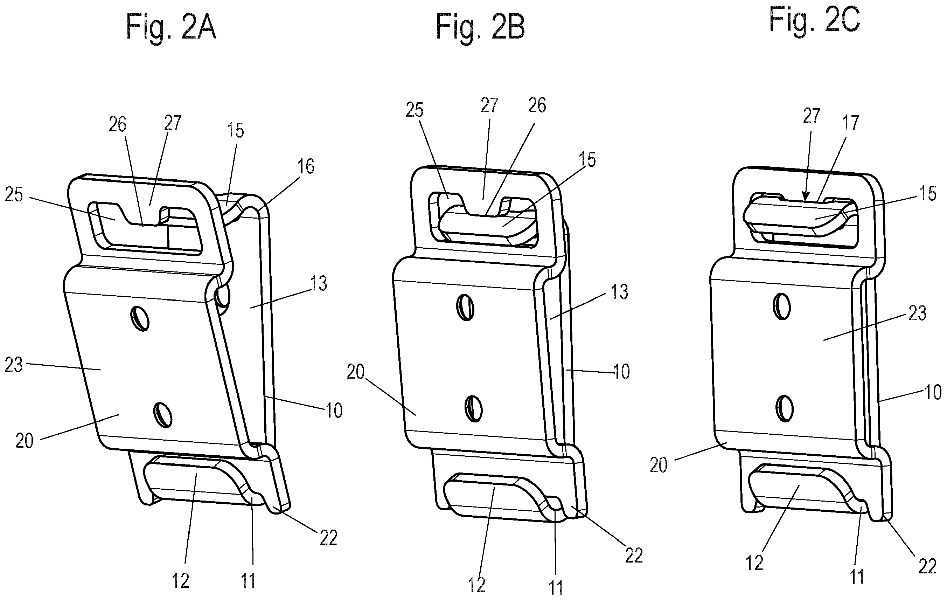

Die Montage des Verbindungsbeschlages 3 wird in den Figuren 2A bis 2C dargestellt.

In einem ersten Schritt wird das zweite Teil 20 so an dem ersten Teil 10 positioniert, dass die Anlagekante 21 in die Aufnahme 11 eingefügt wird. Die beiden Zentriervorsprünge 22 umgreifen dabei die Aufnahme und sichern das zweite Teil 20 gegen ein Verschieben parallel zur Richtung einer Drehachse.

Das zweite Teil 20 wird nun um die Anlagekante 21 um einen ersten Winkelbereich verschwenkt, bis die Gleitfläche 26 an dem Vorsprung 27 die Führungsfläche 15 kontaktiert. Der Schwenkvorgang wird dann fortgesetzt über einen zweiten Winkelbereich, wobei in diesem Winkelbereich die Gleitfläche 26 entlang der Führungsfläche 15 bewegt wird. Dadurch bewegt sich das zweite Teil 20 nicht mehr in einer reinen Drehbewegung, sondern wird zusätzlich verschoben, wobei das zweite Teil 20 so verschoben wird, dass die Anlagekante 21 von der Aufnahme 11 abgehoben wird, wie dies in Figur 2B gezeigt wird. Die Zentriervorsprünge 22 liegen in dieser Position noch um die Aufnahme 11 an und verhindern ein Verschieben des zweiten Teils 20 relativ zu dem ersten Teil 10.

Am Ende der Führungsfläche 15 gelangt der Vorsprung 27 mit der Gleitfläche 26 in den Bereich der Aussparung 17 an der Biegung 16 des ersten Teils 10. Dann wird das zweite Teil 20 wieder relativ zu dem ersten Teil 10 verschoben, so dass die Anlagekante 21 wieder an der Aufnahme 11 anliegt. Dabei greift der Vorsprung 27 in die Aussparung 17 des ersten Teils 10 ein, so dass das zweite Teil 20 an dem ersten Teil 10 gegen ein Verschwenken gesichert ist. Ein Lösen des zweiten Teils 20 kann nun nur noch dadurch erfolgen, dass das zweite Teil 20 verschoben wird, um den Vorsprung 27 aus der Aussparung 17 zu bewegen und dann ein Rückschwenken vorgenommen wird, um die beiden Teile 10 und 20 wieder voneinander zu lösen. Alternativ ist es auch möglich, dass der Vorsprung 27 und/oder seine Anbindung an das zweite Teil 20 sich bei entsprechender maßlicher Auslegung beim Gleiten über die Gleitfläche 26 elastisch und/oder plastisch verformt, und beim Eintauchen in die Aussparung 17 des ersten Teils 10 somit eine erhöhte Sicherung gegen unbeabsichtigtes Lösen erfolgt.

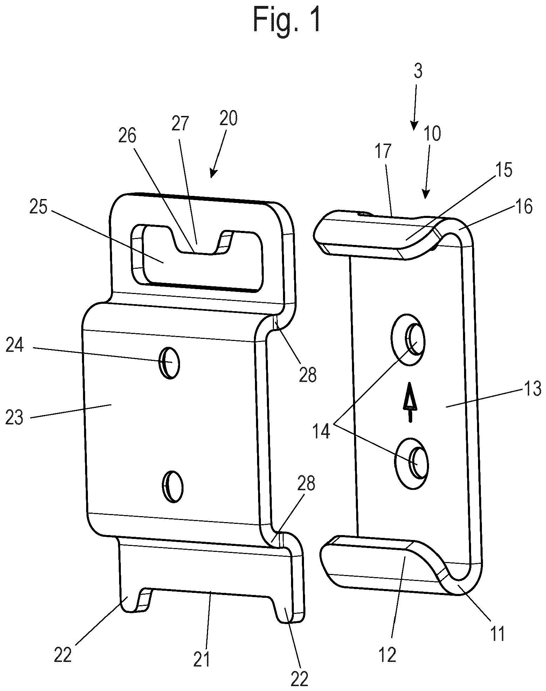

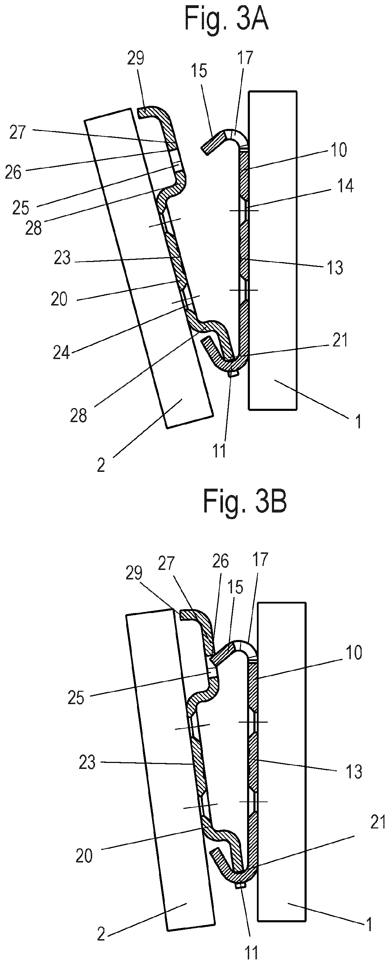

In den Figuren 3A bis 3D ist die Montage des Verbindungsbeschlages 3 der Figuren 1 und 2 im Schnitt gezeigt, wobei zusätzlich schematisch ein erstes Möbelteil 1 dargestellt ist, an dem das erste Teil 10 festgelegt ist, und ein zweites Möbelteil 2, an dem das zweite Teil 20 festgelegt ist.

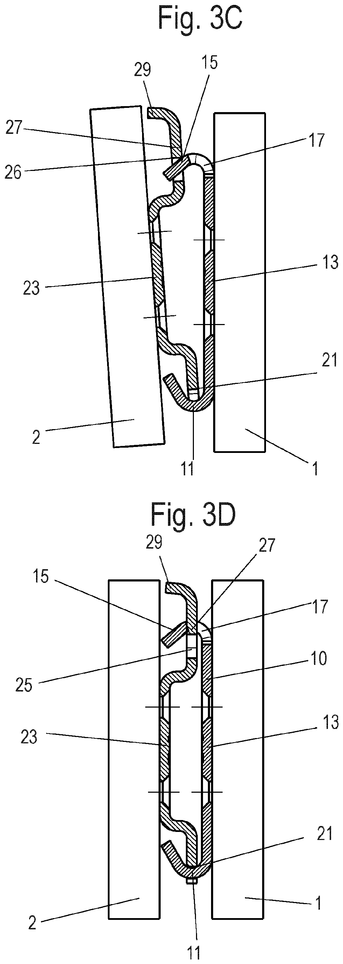

In Figur 3 wurde die Anlagekante 21 in die Aufnahme 11 des ersten Teils 10 eingefügt. Nun kann das zweite Möbelteil 2 mit dem zweiten Teil 20 um die Anlagekante 21 verschwenkt werden, bis die Gleitfläche 26 an dem Vorsprung 27 die Führungsfläche 15 an dem abgebogenen Steg kontaktiert, wie dies in Figur 3B gezeigt ist. Wird nun die Schwenkbewegung fortgesetzt, wird das zweite Teil 20 nicht nur verschwenkt, sondern auch relativ zu dem ersten Teil 10 verschoben. Dadurch gelangt die Anlagekante 21 außer Eingriff von der Aufnahme 11, wie dies in Figur 3C gezeigt ist. Die Gleitfläche 26 gleitet entlang der geneigt angeordneten Führungsfläche 15.

Wenn der Vorsprung 27 und die Gleitfläche 26 das Ende der Führungsfläche 15 erreichen, kann der Vorsprung 27 in die Aussparung 17 an dem ersten Teil 10 eingefügt werden, wie dies in Figur 3D gezeigt ist. Dann wird das zweite Teil 20 wieder relativ zu dem ersten Teil 10 verschoben, so dass die Anlagekante 21 wieder an der Aufnahme 11 anliegt. Das zweite Teil 20 und somit auch das zweite Möbelteil 2 ist relativ zu dem ersten Teil 10 gegen ein Verschwenken in beide Richtungen gesichert, da der Vorsprung 27 an einer Kante der Führungsfläche 15 anliegt und in gegenüberliegenden Richtungen ein Verschwenken durch die Basisfläche 13 begrenzt wird.

In den Figuren 3A bis 3D ist am zweiten Teil 20 eine zusätzliche Biegung 29 im Anschluss an die Öffnung 25 und den Vorsprung 27 angeformt. Diese Biegung 29 dient der Versteifung und Stabilisierung des zweiten Teils 20, insbesondere um einer bleibenden plastischen Verformung des Vorsprunges 27 bzw. dessen Anbindung entgegenzuwirken. Eine weitere Aufgabe einer Biegung 29 kann darin liegen, das Widerstandsmoment gegen Biegung des Materials zu erhöhen, um bewusst ein elastisches Verhalten des Vorsprungs 27 zu erzielen.

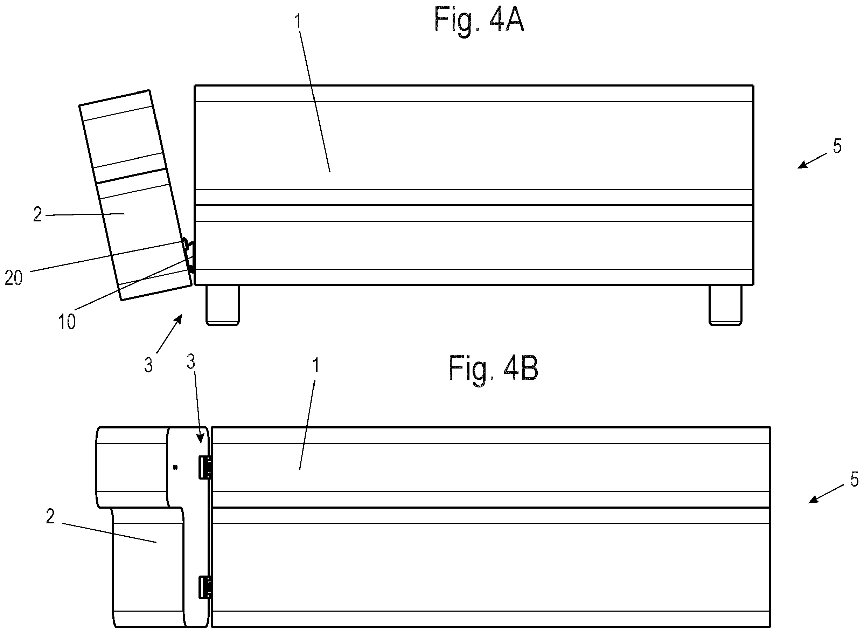

In den Figuren 4A und 4B ist ein erfindungsgemäßes Möbel 5 gezeigt, insbesondere ein Sitzmöbel, wie ein Sofa, bei dem das erste Möbelteil 1 als Sitzteil ausgebildet ist, und das zweite Möbelteil 2 als Seitenteil. An dem ersten Möbelteil 1 ist das erste Teil 10 fixiert, und an dem zweiten Möbelteil 2 das zweite Teil 20. Der Verbindungsbeschlag 3 ist dabei so ausgerichtet, dass die Drehachse beim Verschwenken des zweiten Teils 20 relativ zu dem ersten Teil 10 im Wesentlichen horizontal verläuft. In der dargestellten Position ist das zweite Möbelteil 2 in einem Winkel zur Vertikalen angeordnet, wobei an dem zweiten Möbelteil 2 zwei zweite Teile 20 fixiert sind, die beide in eine Aufnahme 11 eines ersten Teils 10 an dem ersten Möbelteil 1 eingreifen.

Zur Fixierung des zweiten Möbelteils 2 an dem ersten Möbelteil 1 wird nun das zweite Möbelteil 2 mit den beiden zweiten Teilen 20 verschwenkt, wie dies im Detail in den Figuren 3A bis 3D gezeigt ist. Durch die horizontale Ausrichtung der Drehachse werden die Gewichtskräfte zunächst durch die Aufnahme 11 aufgenommen, bevor dann über die Führungsfläche 15 das zweite Möbelteil 2 mit den zweiten Teilen 20 geringfügig angehoben wird, um dann am Ende der Führungsfläche 15 durch die Schwenkraft verriegelt zu werden, indem die Vorsprünge 27 an den zweiten Teilen 20 jeweils in eine Aussparung 17 an einem ersten Teil eingreifen.

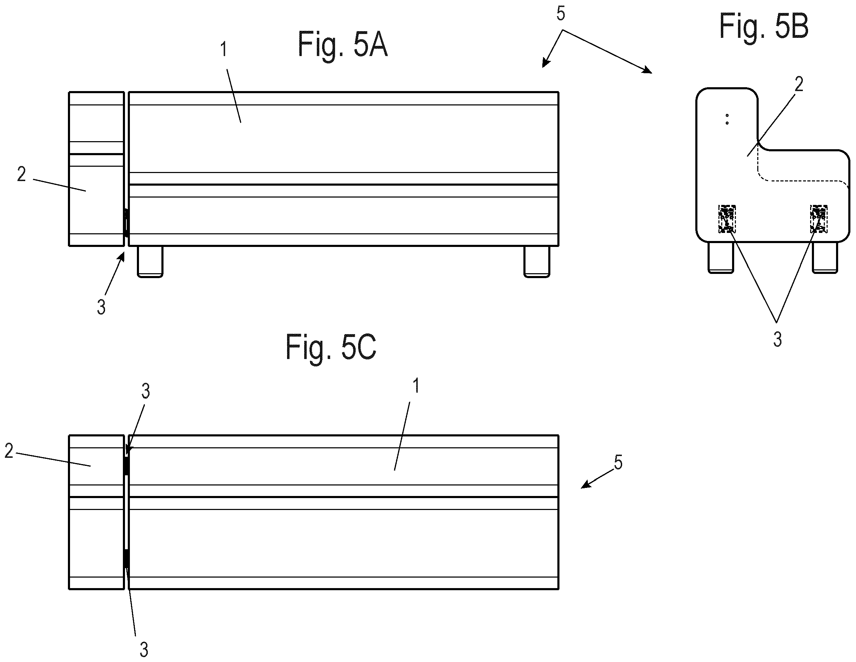

In den Figuren 5A bis 5C ist die montierte Position des Möbels 5 gezeigt, bei dem das zweite Möbelteil 2 an dem ersten Möbelteil 1 verriegelt ist. Ein Lösen des zweiten Möbelteils 2 kann nun nur noch durch ein Anheben des zweiten Möbelteils 2 relativ zum ersten Möbelteil 1 erfolgen, um den Vorsprung 27 außer Eingriff mit der Aussparung 17 zu bringen, um dann das zweite Möbelteil 2 wieder zu verschwenken, um die Möbelteile zu demontieren.

In den Figuren 4A und 4B war die Schwenkachse zur Fixierung der Möbelteile horizontal. Es ist natürlich auch möglich, den Verbindungsbeschlag 3 anders einzusetzen.

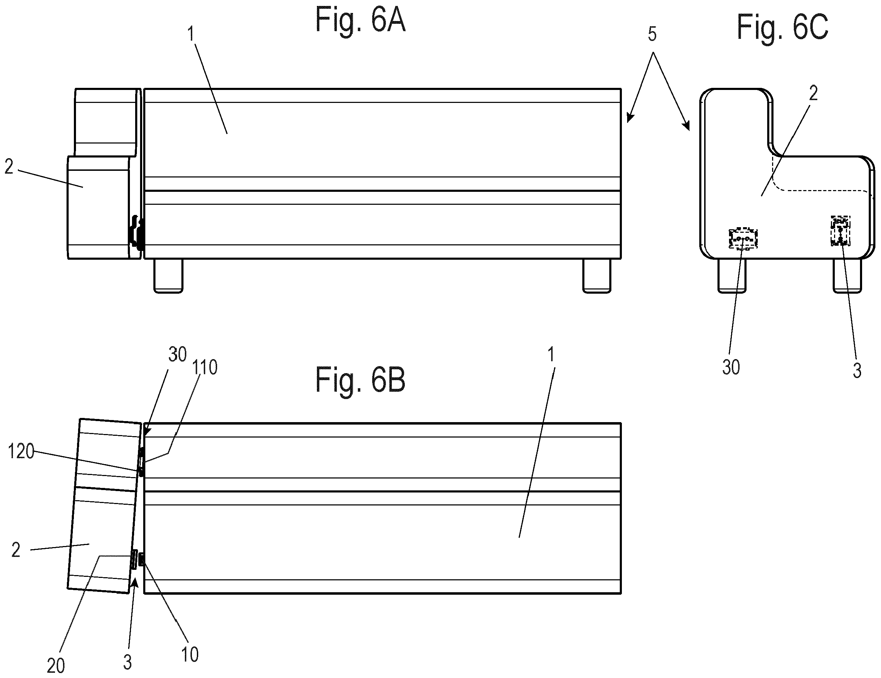

In den Figuren 6A bis 6C ist ein Ausführungsbeispiel eines Möbels 5 mit einer erfindungsgemäßen Vorrichtung gezeigt, bei dem ein erster Verbindungsbeschlag 3 und ein weiterer zweiter Verbindungsbeschlag 30 vorgesehen ist, der zwei Teile 110 und 120 umfasst, die so montiert sind, dass das zweite Möbelteil 2 um eine vertikale Achse relativ zu dem ersten Möbelteil 1 verschwenkt wird, um eine Fixierung vorzunehmen. Das zweite Möbelteil 2 ist über den Verbindungsbeschlag 3 und den weiteren Verbindungsbeschlag 30 an dem ersten Möbelteil 1 fixiert.

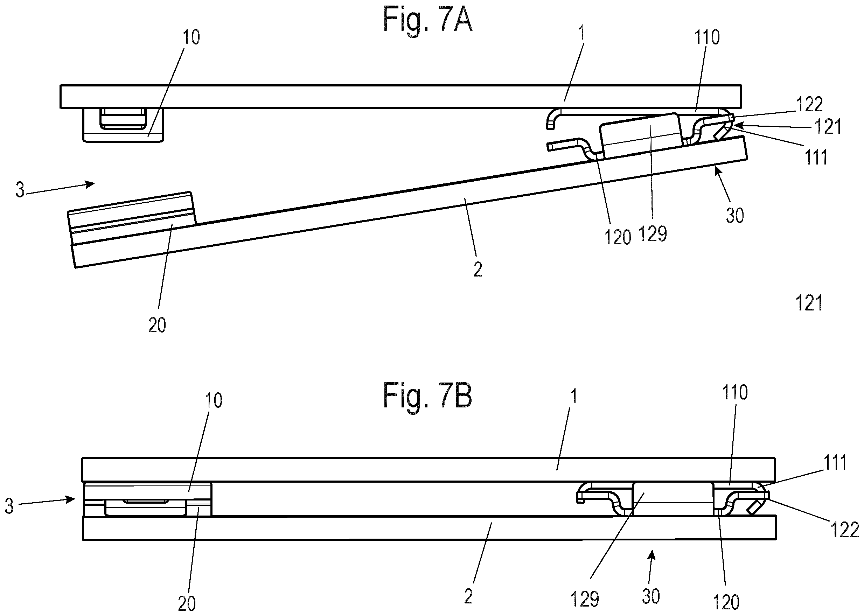

In den Figuren 7A und 7B ist die Montage des Möbelteils 2 an dem ersten Möbelteil 1 gemäß Figur 6 schematisch dargestellt. Bei dem zweiten Teil 120 wurde eine Anlagekante 121 an einer gebogenen Aufnahme 111 des ersten Teils 110 positioniert, wobei die beiden Zentriervorsprünge 122 die Aufnahme 111 umgreifen. Das Verschwenken erfolgt bei diesem Ausführungsbeispiel um eine vertikale Achse, wobei am Verbindungsbeschlag 30 beim Einschwenken keine Translationsbewegung, wie beim Verbindungsbeschlag 3 dargestellt, erforderlich ist, sondern eine gebogene Anlage 131 des ersten Teils 110 kommt zur Anlage zwischen den Zentriervorsprüngen 122 des zweiten Teils 120. Die Sicherung gegen ein Lösen des Möbelteils 2 erfolgt durch die Verbindung, die beim Einschwenken des Möbelteils 2 an dem Verbindungsbeschlag 3 entsteht. In diesem Ausführungsbeispiel erfolgt die Verbindung des Verbindungsbeschlages 3 aber nicht durch ein Schwenken um eine horizontale Achse, sondern beim Einschwenken des Möbelteils 2 um die vertikale Achse.

Bei dem Verbindungsbeschlag 3 kommt die Gleitfläche 26 des zweiten Teils 20 zur Anlage an der Führungsfläche 15 des ersten Teils 10. Dadurch wird das zweite Teil 20 gegenüber dem ersten Teil 10 um einen vorbestimmten Weg angehoben, bis der Vorsprung 27 des zweiten Teils 20 in die Aussparung 17 des ersten Teils 10 eintaucht und somit die Verbindung sichert. Bei diesem kurzen Anheben und Abtauchen des zweiten Teils 20 des Verbindungsbeschlages 3 vollführt die vertikale Schwenkachse des Verbindungsbeschlages 30 eine geringfügige Winkelabweichung von der Vertikalen, indem die Anlagekante121 des zweiten Teils 120 an unterschiedlichen Bereichen der Aufnahme 111 anliegt und um diese geringfügig dreht.

In der montierten Position ist die Kombination der Verbindungsbeschläge 3 und 30 somit gegen ein Verschwenken oder Verschieben gesichert, insbesondere in Schwerkraftrichtung. Zum Lösen dieser Verbindung muss das Möbelteil 2 entgegen der Schwerkraftrichtung im Bereich des Verbindungsbeschlages 30 angehoben werden, wodurch der Vorsprung 27 außer Eingriff mit der Öffnung 17 kommt.

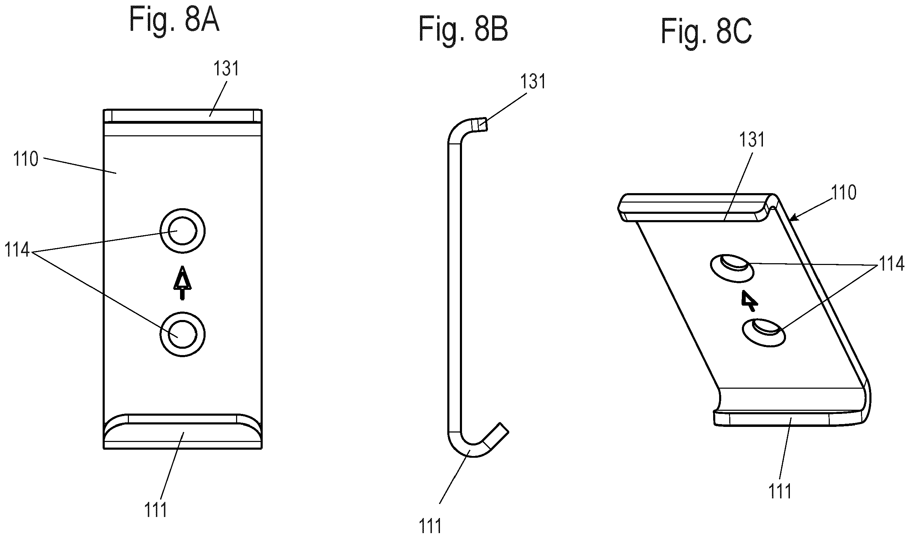

Figur 8A bis 8C zeigt eine Ausführung eines ersten Teils 110 des Verbindungsbeschlages 30. Ein plattenförmiger Abschnitt des ersten Teils weist mehrere Öffnungen 114 für Befestigungsmittel auf. An einer ersten Seite ist die gebogene Aufnahme 111 integral ausgebildet und an der zur ersten Seite gegenüberliegenden zweiten Seite ist die gebogene Anlage 131 ausgebildet.

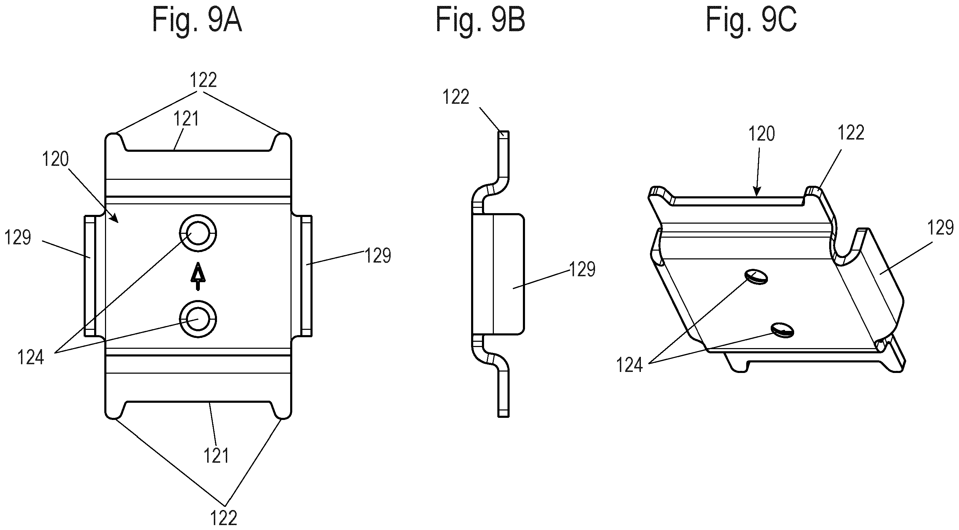

Figur 9A bis C zeigt eine Ausführung eines zweiten Teils 120 des Verbindungsbeschlages 30. An zwei gegenüberliegenden Seiten eines plattenförmigen Abschnittes mit Öffnungen 124 ist jeweils eine Anlagekante 121 zwischen zwei Zentriervorsprüngen 122 angeordnet. Eine der beiden Anlagekanten 121 des zweiten Teils 120 stellt eine vorzugsweise vertikale Achse dar, um die das Möbelteil 2 geschwenkt wird. Diese Anlagekante 121 kommt an der Aufnahme 111 des ersten Teils 110 zur Anlage und schwenkt, bis die andere Anlagekante 121 benachbart zu der gebogenen Anlage 131 angeordnet ist. Beim Einschwenken wird die Anlage 131 des ersten Teils 110 zwischen den Zentrierungen 122 des zweiten Teils 120 positioniert, wodurch die Verbindung in zwei von drei Raumrichtungen festgelegt ist.

An dem zweiten Teil 120 sind ferner zwei seitliche Biegungen 129 vorgesehen, die als Versteifung dienen, um Verformungen entgegenzuwirken. Optional oder gleichzeitig können sie aber auch als Distanzhalter zwischen dem ersten Teil 110 und dem zweiten Teil 120 dienen, um einen vordefinierten Mindestabstand der Teile herzustellen.

Die Sicherung des Möbelteils 2 zum Möbelteil 1 erfolgt durch die zusätzliche Verbindung der ersten und zweiten Teile 10 und 20 des Verbindungsbeschlages 3, dessen Montage mit Bezug auf die Figuren 2 und 3 beschrieben ist.

Alternativ zur formschlüssigen Verbindung oder Anlage der Aufnahme 11 oder 111 zwischen zwei Zentriervorsprüngen 22 oder 122 und/oder der formschlüssigen Verbindung der Anlage 131 zwischen zwei Zentriervorsprüngen 122 kann auch eine andere Formschlussverbindung gewählt werden, beispielsweise durch Vorsprünge, die in Öffnungen am korrespondierenden teil eingreifen.

Die Anordnung des ersten Teils 10 oder 110 und zweiten Teils 20 oder 120 am ersten Möbelteil 1 und am zweiten Möbelteil 2 ist im Sinne dieser Erfindung jeweils austauschbar. Die Teile können sinnvoll so montiert werden, dass je nachdem welche Möbelteile zu verbinden sind, und wie die Schwerkraft einwirkt, die Teile demgemäß angeordnet werden.

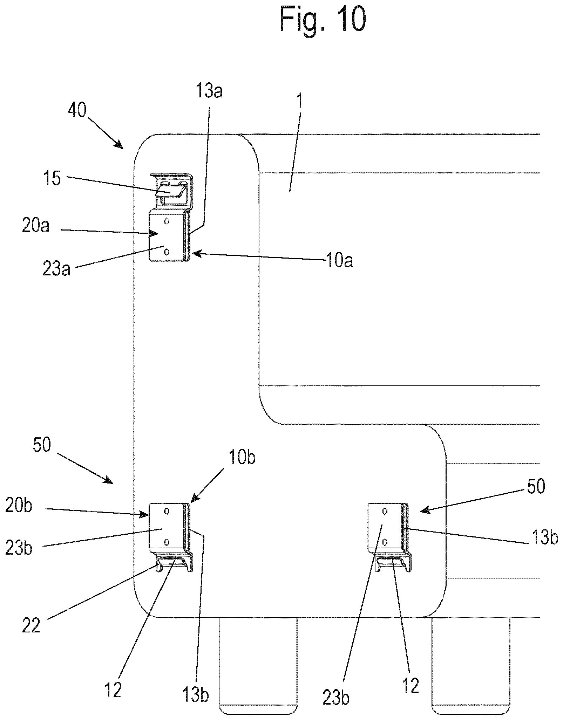

In Figur 10 ist eine Vorrichtung zum Verbinden von Möbelteilen gezeigt, bei der ein erster Verbindungsbeschlag 40 und zwei zweite Verbindungsbeschläge 50 vorgesehen sind, wobei die Anzahl der Verbindungsbeschläge 50 auch anders ausgestaltet sein kann, beispielsweise kann nur ein Verbindungsbeschlag 50 oder mehr als zwei Verbindungsbeschläge 50 vorgesehen sein.

Jeder Verbindungsbeschlag 50 umfasst ein erstes Teil 10b, das an dem ersten Möbelteil 1 festlegbar ist, insbesondere über eine Basisfläche 13. An dem ersten Teil 10b ist ein zweites Teil 20b festlegbar, das an dem zweiten Möbelteil fixiert werden kann. An dem ersten Teil 10b ist zwischen einem Steg 12 und der Basisfläche 13 eine Aufnahme ausgebildet, an der eine Anlagekante des zweiten Teils 20b verschwenkbar ist.

Der erste Verbindungsbeschlag 40 umfasst ein erstes Teil 10a, das an dem ersten Möbelteil 1 festlegbar ist, und ein zweites Teil 20a, das an dem zweiten Möbelteil festlegbar ist. An dem ersten Teil 10a ist eine Führungsfläche 15 ausgebildet, an der das zweite Teil 20a des ersten Verbindungsbeschlages 40 mit einer Gleitfläche verschoben wird, wenn das zweite Teil 20b des ersten Verbindungsbeschlages 50 um die Anlagekante als Schwenkachse verschwenkt wird. Das Verschieben entlang der Führungsfläche 15 erfolgt dabei zumindest teilweise in radiale Richtung, also in Figur 10 in vertikaler Richtung nach oben, bis das Ende der Führungsfläche erreicht ist und das zweite Teil mit dem zweiten Teil 20a und dem zweiten Teil 20b abgesenkt wird, um den Verbindungsbeschlag 40 zu verriegeln.

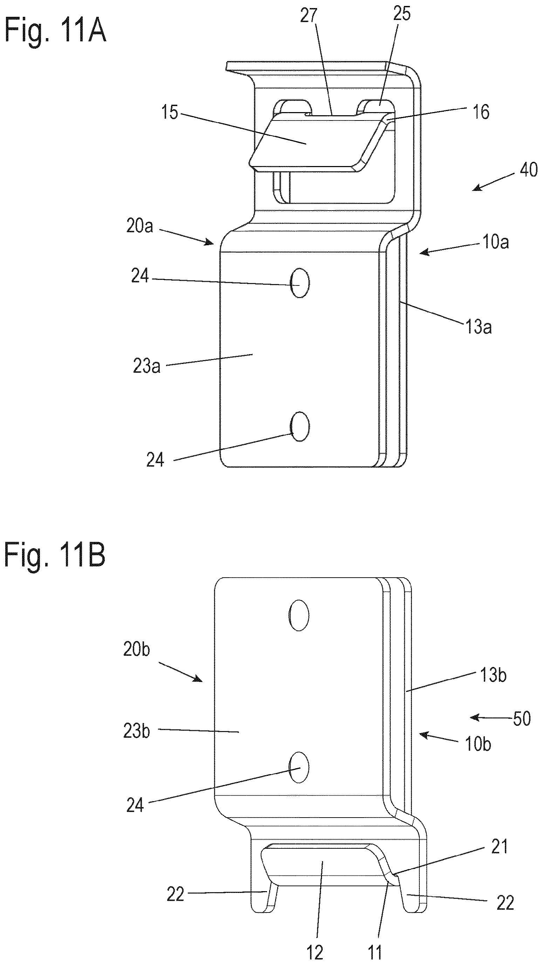

In den Figuren 11A und 11B sind der erste Verbindungsbeschlag 40 und der zweite Verbindungsbeschlag 50 ohne Möbelteile dargestellt. Bei dem ersten Verbindungsbeschlag 40 ist hinter der Führungsfläche 15 eine Aussparung ausgebildet, in die ein Vorsprung 27 an dem zweiten Teil 20a eingreift. Die Aussparung ist dabei im Bereich einer Biegung 16 an dem ersten Teil 10a ausgebildet, das an einer Basisfläche 13a an dem ersten Möbelteil 1 fixiert ist.

An dem zweiten Verbindungsbeschlag 50 ist an dem ersten Teil 10b eine gebogene Aufnahme 11 ausgebildet, die zur Aufnahme einer Anlagekante 21 an dem zweiten Teil 20b dient. Die Anlagekante 21 ist dabei zwischen einem Steg 12 und der Basisfläche 13b aufgenommen. Seitlich neben der der Anlagekante 21 sind nach unten ragende Zentriervorsprünge 22 ausgebildet, um eine Verschiebung in Längsrichtung der Anlagekante 21 zu verhindern oder zu begrenzen.

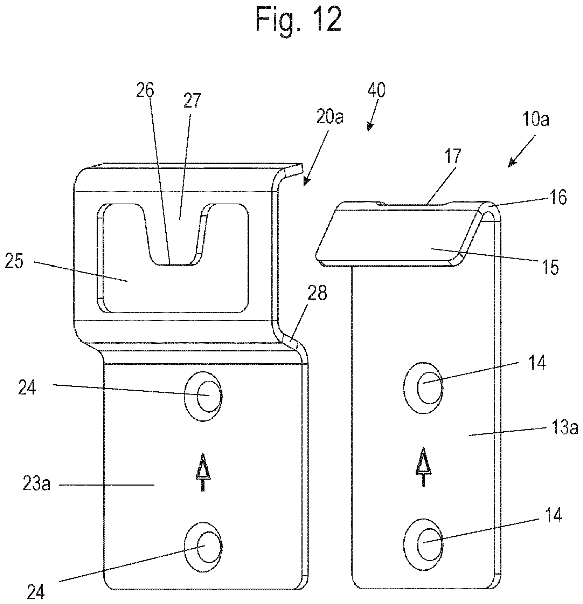

In Figur 12 ist der erste Verbindungsbeschlag 40 vor der Montage gezeigt. Das erste Teil 10a umfasst eine Basisfläche 13a mit Öffnungen 14 zur Montage an dem ersten Möbelteil und besitzt im Bereich einer Biegung 16 eine Aussparung 17 zur Aufnahme des Vorsprunges 27. Ferner ist benachbart zu der Biegung 16 die Führungsfläche 15 integral mit dem ersten Teil 10a ausgebildet. Das zweite Teil 20a des ersten Verbindungsbeschlages 40 umfasst eine Basisfläche 23a mit Öffnungen 24 zur Fixierung des zweiten Teils 20a an dem zweiten Möbelteil. Integral mit der Basisfläche 23a ist über eine Stufe 28 versetzt eine Öffnung 25 ausgespart, in der ein Vorsprung 27 mit der Gleitfläche 26 nach unten hervorsteht. Die Gleitfläche 26 kann entlang der Führungsfläche 15 bei der Montage verschoben werden.

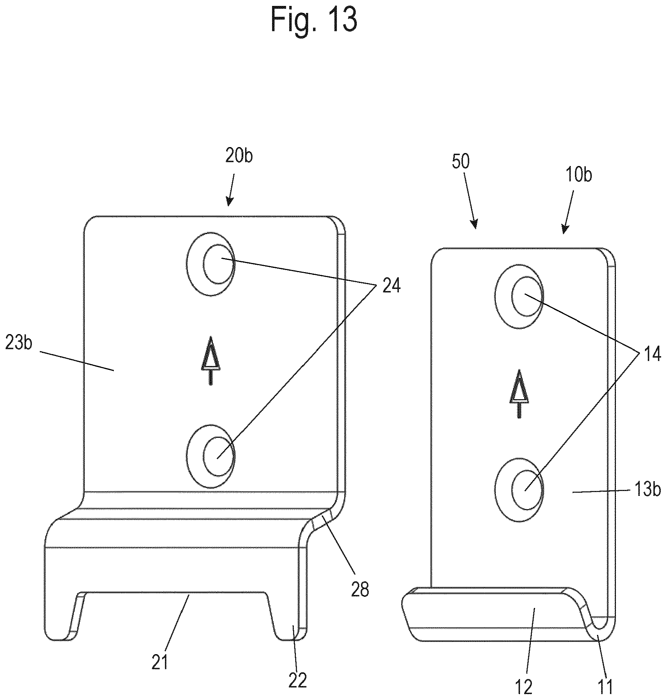

In Figur 13 ist der zweite Verbindungsbeschlag 50 vor der Montage gezeigt. Das erste Teil 10b ist über die Basisfläche 13b an dem ersten Möbelteil 1 über Befestigungsmittel fixierbar, die Öffnungen 14 durchgreifen. Integral mit der Basisfläche 13b sind die Aufnahme 11 und der umgebogene Steg 12 ausgebildet.

Das zweite Teil 20b des zweiten Verbindungsbeschlages 50 umfasst die untere Anlagekante 21 zwischen den beiden Zentriervorsprüngen 22 und die Basisfläche 23b, die über eine Stufe 28 versetzt angeordnet ist und Öffnungen 24 aufweist.

Für die Montage der Vorrichtung werden die beiden zweiten Teile 20b des zweiten Verbindungsbeschlages 50 an den ersten Teilen 10b so positioniert, dass die Anlagekante 21 jeweils in der Aufnahme 11 angeordnet wird. Dann kann das zweite Möbelteil 2 relativ zu dem ersten Möbelteil 1 verschwenkt werden, wobei die Schwenkachse durch die Anlagekante 21 und die Aufnahme 11 vorgegeben ist. Das Verschwenken erfolgt so lange, bis die Gleitfläche 26 an dem Vorsprung 27 auf die Führungsfläche 15 trifft, so dass dann zusätzlich zu der reinen Schwenkbewegung eine Schiebebewegung erfolgt, die eine Richtungskomponente in radiale Richtung bezogen auf die Schwenkachse besitzt. Durch dieses leichte Anheben des zweiten Möbelteils verglichen mit einer reinen Schwenkbewegung gelangt der Vorsprung 27 entlang der Führungsfläche 15, bis die Aussparung 17 erreicht wird. Dann greift der Vorsprung 27 in die Aussparung 17 ein, und das zweite Möbelteil 2 wird relativ zu dem ersten Möbelteil 1 abgesenkt, bis die Anlagekanten 21 an den beiden Teilen 20b in der Aufnahme 11 anliegen. An dem ersten Verbindungsbeschlag 40 ist das zweite Teil 20b des ersten Verbindungsbeschlages 40 gegen eine Schwenkbewegung verriegelt, da der Vorsprung 27 in die Aussparung 17 eingreift.

### Bezugszeichenliste

- 1: erstes Möbelteil
- 2: zweites Möbelteil
- 3: Verbindungsbeschlag
- 5: Möbel
- 10, 10a, 10b: erstes Teil
- 11: Aufnahme
- 12: Steg
- 13, 13a, 13b: Basisfläche
- 14: Öffnung
- 15: Führungsfläche
- 16: Biegung
- 17: Aussparung
- 20, 20a, 20b: zweites Teil
- 21: Anlagekante
- 22: Zentriervorsprung
- 23, 23a, 23b: Basisfläche
- 24: Öffnung
- 25: Öffnung
- 26: Gleitfläche
- 27: Vorsprung
- 28: Stufe
- 29: Biegung
- 30: Verbindungsbeschlag
- 40: Verbindungsbeschlag
- 50: Verbindungsbeschlag
- 110: Erstes Teil
- 111: Aufnahme
- 114: Öffnung
- 120: Zweites Teil
- 121: Anlagekante
- 122: Zentriervorsprung
- 124: Öffnung
- 129: Biegung
- 131: Anlage

## Patentansprüche

1. Vorrichtung zur Verbindung von Möbelteilen, insbesondere Möbelteilen eines Polstermöbels, umfassend einen ersten Verbindungsbeschlag (3, 40) mit einem ersten an einem ersten Möbelteil (1) festlegbaren Teil (10, 10a) und einem zweiten an einem zweiten Möbelteil (2) festlegbaren Teil (20, 20a), sowie einen zweiten Verbindungsbeschlag (30, 50) mit einem ersten an dem ersten Möbelteil (1) festlegbaren Teil (10b, 110) und einem zweiten an dem zweiten Möbelteil (2) festlegbaren Teil (20b, 120), wobei das erste Teil (10b, 110) des zweiten Verbindungsbeschlages (30, 50) eine Aufnahme (11, 111) für eine Anlagekante (21, 121) des zweiten Teils (20b, 120) des zweiten Verbindungsbeschlages (30, 50) aufweist und das zweite Teil (20b) relativ zu dem ersten Teil (110) um die Anlagekante (21, 121) in einem Winkelbereich verschwenkbar ist, wobei an dem ersten Teil (10, 10a) des ersten Verbindungsbeschlages (3, 40) eine Führungsfläche (15) vorgesehen ist, die das zweite Teil (20a, 20) des ersten Verbindungsbeschlages (3, 40) mit einer Gleitfläche (26) beim Verschwenken kontaktiert und das zweite Teil (20, 20a) relativ zu dem ersten Teil (10, 10a) zusätzlich translatorisch verschiebt, und das erste Teil (10, 10a) am Ende der Führungsfläche (15) ein Verriegelungselement aufweist, an dem das zweite Teil (20, 20a) gegen ein Verschwenken verriegelbar ist, **dadurch gekennzeichnet, dass** das translatorische Verschieben bezogen auf eine durch die Anlagekante (121) gebildete Schwenkachse zumindest teilweise senkrecht zur radialen Richtung erfolgt.

2. Verfahren zur Montage eines Möbels (5) mit einem ersten Möbelteil (1) an dem ein erstes Teil (10) und einem zweiten Möbelteil (2), an dem ein zweites Teil (20) eines Verbindungsbeschlages (3) fixiert ist, sowie aus einem zweiten Verbindungsbeschlag (30) mit einem ersten an dem ersten Möbelteil (1) festlegbaren Teil (110) und einem zweiten an dem zweiten Möbelteil (2) festlegbaren Teil (120), mit den folgenden Schritten:
- Ansetzen einer Anlagekante (121) des zweiten Teils (120) des zweiten Verbindungsbeschlages (30) an einer Aufnahme (111) des ersten Teils (110) des zweiten Verbindungsbeschlages (30);
- Verschwenken des zweiten Teils (120) relativ zu dem ersten Teil (110); Bewegen einer Gleitfläche (26) an dem zweiten Teil (20) des ersten Verbindungsbeschlages (3) entlang einer Führungsfläche (15) an dem ersten Teil (10) des ersten Verbindungsbeschlages (3) bei dem Verschwenken, wobei das zweite Teil (20) relativ zu dem ersten Teil (10) zusätzlich translatorisch verschoben wird, und
- Verriegeln des zweiten Teils (20) an dem ersten Teil (10) am Ende der Führungsfläche (15) gegen eine Schwenkbewegung,
**dadurch gekennzeichnet, dass** das translatorische Verschieben bezogen auf eine durch die Anlagekante (121) gebildete Schwenkachse zumindest teilweise senkrecht zur radialen Richtung erfolgt.

## Claims

1. Device for connecting furniture parts, in particular furniture parts of an item of upholstered furniture, comprising a first connecting fitting (3, 40) having a first part (10, 10a) which can be fixed to a first furniture part (1) and a second part (20, 20a) which can be fixed to a second furniture part (2), as well as a second connecting fitting (30, 50) having a first part (10b, 110) which can be fixed to the first furniture part (1) and a second part (20b, 120) which can be fixed to the second furniture part (2), wherein the first part (10b, 110) of the second connecting fitting (30, 50) comprises a receptacle (11, 111) for a bearing edge (21, 121) of the second part (10b, 120) of the second connecting fitting (30, 50) and the second part (20b) is pivotable in an angular range around the bearing edge (21, 121) relative to the first part (110), wherein a guide surface (15) is provided on the first part (10, 10a) of the first connecting fitting (3, 40), which guide surface (15) contacts the second part (20, 20a) of the first connecting fitting (3, 40) with a sliding surface (26) during pivoting and additionally displaces the second part (20, 20a) in translation relative to the first part (10, 10a), and the first part (10, 10a) has a locking element at the end of the guide surface (15), on which locking element the second part (20, 20a) can be locked against pivoting **characterized in that** the translational displacement takes place at least partially perpendicular to the radial direction with respect to a pivot axis formed by the bearing edge (121).

2. Method for assembling a piece of furniture (5) having a first furniture part (1) to which a first part (10) is fixed and a second furniture part (2) to which a second part (20) of a connecting fitting (3) is fixed, and also comprising a second connecting fitting (30) having a first part (110) which can be fixed to the first furniture part (1) and a second part (120) which can be fixed to the second furniture part (2), comprising the following steps:
- placing a bearing edge (121) of the second part (120) of the second connecting fitting (30) against a receptacle (111) of the first part (110) of the second connecting fitting;
- pivoting the second part (120) relative to the first part (110);
- moving a sliding surface (26) on the second part (20) of the first connecting fitting (3) along a guide surface (15) on the first part (10) of the first connecting fitting (3) during said pivoting, wherein the second part (20) is additionally displaced in translation relative to the first part (10), and
- locking the second part (20) to the first part (10) at the end of the guide surface (15) against a pivoting movement
**characterized in that** the translational displacement takes place at least partially perpendicular to the radial direction with respect to a pivot axis formed by the bearing edge (121).

## Revendications

1. Dispositif d'assemblage de pièces de meubles, en particulier de pièces de meubles d'un meuble rembourré, comprenant un premier raccord (3, 40) ayant une première partie (10, 10a) qui peut être fixée à une première pièce de meuble (1) et une deuxième partie (20, 20a) qui peut être fixée à une deuxième pièce de meuble (2), ainsi qu'une deuxième ferrure d'assemblage (30, 50) ayant une première partie (10b, 110) qui peut être fixée à la première pièce de meuble (1) et une deuxième partie (20b, 120) qui peut être fixée à la deuxième pièce de meuble (2), dans laquelle la première partie (10b, 110) de la deuxième ferrure d'assemblage (30, 50) comprend un réceptacle (11, 111) pour un bord d'appui (21, 121) de la deuxième partie (10b, 120) de la deuxième ferrure d'assemblage (30, 50) et la deuxième partie (20b) peut pivoter dans une plage angulaire autour du bord d'appui (21, 121) par rapport à la première partie (110), dans laquelle une surface de guidage (15) est prévue sur la première partie (10, 10a) du premier raccord (3, 40), laquelle surface de guidage (15) entre en contact avec la deuxième partie (20, 20a) du premier raccord (3, 40) avec une surface de glissement (26) pendant le pivotement et déplace en outre la deuxième partie (20, 20a) en translation par rapport à la première partie (10, 10a), et la première partie (10, 10a) comporte un élément de verrouillage à l'extrémité de la surface de guidage (15), sur lequel l'élément de verrouillage permet de bloquer la deuxième partie (20, 20a) contre le pivotement, **caractérisé en ce que** le déplacement en translation s'effectue au moins partiellement perpendiculairement à la direction radiale par rapport à un axe de pivotement formé par le bord d'appui (121).

2. Procédé d'assemblage d'un meuble (5) comportant une première pièce de meuble (1) auquel est fixée une première partie (10) et une deuxième pièce de meuble (2) auquel est fixée une deuxième partie (20) d'un raccord (3), et comportant également une deuxième ferrure d'assemblage (30) comportant une première partie (110) pouvant être fixée à la première pièce de meuble (1) et une deuxième partie (120) pouvant être fixée à la deuxième pièce de meuble (2), comprenant les étapes suivantes :
- en plaçant un bord d'appui (121) de la deuxième partie (120) de la deuxième ferrure d'assemblage (30) contre un réceptacle (111) de la première partie (110) du deuxième raccord ;
- faire pivoter la deuxième partie (120) par rapport à la première partie (110) ;
- déplacer une surface de glissement (26) sur la deuxième partie (20) du premier raccord (3) le long d'une surface de guidage (15) sur la première partie (10) du premier raccord (3) pendant ledit pivotement, la deuxième partie (20) étant en outre déplacée en translation par rapport à la première partie (10), et
- bloquer la deuxième partie (20) sur la première partie (10) à l'extrémité de la surface de guidage (15) contre un mouvement de pivotement
**caractérisé par le fait que** le déplacement en translation s'effectue au moins partiellement perpendiculairement à la direction radiale par rapport à un axe de pivotement formé par le bord d'appui (121).
